# EUROPÄISCHE PATENTSCHRIFT

(11) **EP 4 264 716 B1**
(45) Veröffentlichungstag und Bekanntmachung des Hinweises auf die Patenterteilung: **19.02.2025**
(21) Anmeldenummer: 21843887.7
(22) Anmeldetag: 17.12.2021
(51) Int. Cl.: H01M 8/04007, H01M 8/04111, H01M 8/04119, B05B 7/00, B01F 23/213, H01M 8/10

(54) **VORRICHTUNG ZUR LUFTVERSORGUNG EINER BRENNSTOFFZELLE**
DEVICE FOR SUPPLYING AIR TO A FUEL CELL
DISPOSITIF D'ALIMENTATION EN AIR D'UNE PILE À COMBUSTIBLE

(30) Priorität: 18.12.2020 DE 102020007745
(43) Veröffentlichungstag der Anmeldung: 25.10.2023
(73) Patentinhaber: cellcentric GmbH & Co. KG, 73230 Kirchheim unter Teck (DE)
(72) Erfinder: HAUSMANN, Philipp, 73230 Kirchheim/Teck-Nabern (DE)
(74) Vertreter: Platzöder, Michael Christian
(86) Internationale Anmeldenummer: PCT/EP2021/086357
(87) Internationale Veröffentlichungsnummer: WO 2022/129445

(56) Entgegenhaltungen:
- DE-A1- 10 223 353
- DE-A1- 102012 011 863
- JP-A- 2001 283 887

## Beschreibung

Die Erfindung betrifft eine Vorrichtung zur Luftversorgung einer Brennstoffzelle nach der im Oberbegriff von Anspruch 1 näher definierten Art. Außerdem betrifft sie ein Brennstoffzellensystem mit einer derartigen Vorrichtung.

Die Luftversorgung von Brennstoffzellen erfolgt typischerweise über eine Luftfördereinrichtung, beispielsweise eine Strömungsmaschine, welche elektromotorisch angetrieben wird und ggf. auch von einer Abluftturbine unterstützend angetrieben werden kann. Dieser Aufbau ist allgemein unter dem Begriff elektrischer Turbolader oder ETC bzw. motorunterstützter Turbolader bekannt. Dabei ist es so, dass nach dem Verdichten die Zuluft zu der Brennstoffzelle entsprechend aufgeheizt ist. Bei einer Niedertemperaturbrennstoffzelle, insbesondere einer PEM-Brennstoffzelle ist dies ein gravierender Nachteil und in vielen herkömmlichen Aufbauten ist ein Ladeluftkühler vorgesehen. Dieser kühlt die Luft herunter bevor sie durch einen Befeuchter strömt und für die Verwendung in der Brennstoffzelle entsprechend befeuchtet wird. Dieser Aufbau ist groß, komplex und verursacht Druckverluste in dem Zuluftstrom. Insbesondere ein Ladeluftkühler hat dabei den Nachteil, dass er den Kühlkreislauf des Brennstoffzellensystems zusätzlich belastet. Da die Abfuhr der Abwärme des Brennstoffzellensystems bei dem relativ niedrigen Temperaturniveau dieser Abwärme von meist unter 100 bis 120°C ohnehin schwierig ist, stellt der zusätzliche Wärmeeintrag durch den Ladeluftkühler einen erheblichen Nachteil dar.

Die DE 10 2004 038 633 B4 schlägt nun vor, die Befeuchtung der Luft zu realisieren indem über Injektoren das Kondensat des Brennstoffzellensystems in den als Ladeluftkühler benutzten Wärmetauscher eingebracht wird. Damit wird einerseits Produktwasser der Brennstoffzelle aufgebraucht und andererseits kann auf einen Befeuchter, beispielsweise einen Membranbefeuchter, welcher als Gas/Gas-Befeuchter ausgebildet ist, verzichtet werden. Die Belastung des Kühlkreislaufs bleibt hier jedoch bestehen.

Die DE 10 2017 214 312 A1 befeuchtet den Zuluftstrom zu einer Brennstoffzelle mittels Wasser welches aus dem Brennstoffzellensystem kondensiert und über ein Einspritzventil in den Volumenstrom nach dem Verdichter eingespritzt wird. Hierdurch wird die Befeuchtung erreicht, auf einen herkömmlichen Befeuchter kann verzichtet werden. Das Thema der Ladeluftkühlung spielt hier keine Rolle und ist nicht erwähnt.

Aus der DE 10 2012 011 863 A1 ist ein Brennstoffzellensystem mit wenigstens einer Brennstoffzelle bekannt, welche eine Membran-Elektroden-Anordnung umfasst, die zwischen einer ersten Separatorplatte mit Verteilungskanälen für die Verteilung eines Brennstoffs und einer zweiten Separatorplatte mit Verteilungskanälen für die Verteilung eines Oxidationsmittels angeordnet ist, wobei eine Befeuchtungseinrichtung zum Befeuchten einer Membran der Membran-Elektroden-Anordnung mit einem Befeuchtungsmedium wenigstens zwei weitere Kanäle für das Befeuchtungsmedium umfasst, welche in zumindest einer der beiden Separatorplatten ausgebildet sind, und die Kanäle an voneinander verschiedenen Stellen in die dieser Separatorplatte zugeordneten Verteilungskanäle einmünden.

Weiterer Stand der Technik ist in den Druckschriften DE 102 23 353 A1 und JP 2001 283887 A offenbart.

Die Aufgabe der hier vorliegenden Erfindung besteht nun darin, eine verbesserte Vorrichtung zur Luftversorgung einer Brennstoffzelle nach der im Oberbegriff von Anspruch 1 näher definierten Art anzugeben.

Erfindungsgemäß wird dieser Aufgabe durch eine Vorrichtung mit den Merkmalen im Anspruch 1, und hier insbesondere im kennzeichnenden Teil des Anspruchs 1 gelöst. Vorteilhafte Ausgestaltungen und Weiterbildungen der Vorrichtung ergeben sich aus den hiervon abhängigen Unteransprüchen. Im Anspruch 10 ist außerdem ein Brennstoffzellensystem mit einer derartigen Vorrichtung angegeben.

Die erfindungsgemäße Vorrichtung nutzt ähnlich wie im Stand der Technik eine Düse zur Befeuchtung des Zuluftstroms. Dabei ist es so, dass erfindungsgemäß im Querschnitt des Zuluftstroms ein Feld von Zweistoffdüsen für die Zufuhr des auskondensierten Wassers ausgebildet ist. Für jede der Zweistoffdüsen steht dabei ein abgetrennter durchströmbarer Querschnitt zur Verfügung, sodass also jede Düse von ihrem Luftstrom gezielt angeströmt wird. Dies macht die geeignete Auslegung der Zweistoffdüse auf den Volumenstrom an Luft, welchen sie befeuchten soll, einfach und sehr effizient. Jeder der abgetrennten durchströmbaren Querschnitte umfasst dabei einen Ventilsitz und einen Ventilkörper, welcher entgegen der Strömung eine Rückstellkraft in Richtung des Ventilsitzes erfährt, beispielsweise durch eine Feder oder ein anderes Rückstellelement.

Die einzelnen Rückstellkräfte lassen sich dabei gemäß einer außerordentlich günstigen Weiterbildung der erfindungsgemäßen Vorrichtung für jeden einzelnen der abgetrennten durchströmbaren Querschnitte bei der Konstruktion individuell vorgeben, sodass je nach Druck- und Volumenstrom, welchen die Luftfördereinrichtung aufbaut, immer nur der eine oder der andere oder eine gezielte Anzahl von Ventilkörpern von den Ventilsitzen abgehoben wird, um die jeweilige Zweistoffdüse zu durchströmen und das ihr zugeführte Wasser zu zerstäuben. Sind alle Ventilkörper in allen abgetrennten durchströmbaren Querschnitten von ihren Ventilsitzen abgehoben, muss ein entsprechender Querschnitt zur Verfügung stehen, welcher für den maximalen Luftvolumenstrom ausgelegt ist, und bei welchem alle Zweistoffdüsen in dem Feld der Zweistoffdüsen mit Wasser versorgt werden und den Volumenstrom befeuchten.

Es hat sich dabei gezeigt, dass die Befeuchtung des heißen Volumenstroms nach dem Strömungsverdichter, welcher beispielsweise Temperaturen in der Größenordnung von 150 bis 250°C aufweisen kann, ideal ist. Das zugeführte Wasser, welches gemäß einer vorteilhaften Weiterbildung der Idee über einen Wärmetauscher vorgewärmt werden kann, insbesondere durch Abwärme aus dem Brennstoffzellensystem, kann dann ideal in dem Volumenstrom verdampft werden. Dadurch wird einerseits eine Befeuchtung des Zuluftstroms sichergestellt und andererseits wird dieser nach der Luftfördereinrichtung abgekühlt. Je nach benötigtem Zuluftstrom kann eine geeignete Befeuchtung aufgrund der zu diesem Volumenstrom passenden Anzahl von getrennten durchströmbaren Querschnitten, welche durchströmt werden, gewährleistet werden. Dadurch kann eine ideale Anpassung erreicht werden. Insbesondere kann eine so ausgebildete Vorrichtung zur Luftversorgung dann sowohl auf den Ladeluftkühler als auch auf den Befeuchter verzichten, so dass die im Zuluftstrom entstehenden Druckverluste effizient verringert werden. Darüber hinaus lassen sich die Komponenten und der für die Komponenten benötigte Bauraum einsparen, so dass auch dies für weitere Vorteile sorgt.

Bei der schon oben beschriebenen Ausgestaltungsvariante, bei welcher das auskondensierte Wasser entsprechend vorgewärmt wird, und zwar durch Abwärme des Brennstoffzellensystem selbst, ermöglicht der Aufbau außerdem eine Entlastung des Kühlkreislaufs der Brennstoffzelle. Dieser wird also nicht nur durch die Möglichkeit auf den Ladeluftkühler zu verzichten entlastet, sondern darüber hinaus indem Wärme aus dem Kühlkreislauf der Brennstoffzelle zur Vorwärmung des auskondensierten Wassers vor der Zerstäubung genutzt wird. Dies hilft massiv dabei, die ohnehin hinsichtlich der Abführung von Abwärme kritische Konstellation des Kühlkreislaufs bei Niedertemperatur - Brennstoffzellen weiter zu optimieren.

Ein weiterer ganz entscheidender Vorteil des Aufbaus ist auch der Einsatz der Ventilkörper und Ventilsitze, welche durch die von der Luftfördereinrichtung geförderter Volumenstrom bedarfsgerecht geöffnet werden. Sinkt dieser Volumenstrom unter einen bestimmten Grenzwert oder bleibt gänzlich aus, dann werden die Ventilkörper auf die Ventilsitze gedrückt oder gezogen und der Aufbau wird abgedichtet. Es entsteht so also als Zusatznutzen der erfindungsgemäßen Vorrichtung ein passives Kathodenabsperrventil, welches immer dann, wenn die Luftfördereinrichtung nicht in Betrieb ist, und dementsprechend keine Durchströmung der Brennstoffzelle mit Luft gewünscht ist, eine solche effizient verhindert.

Übliche bei Druck selbsttätig öffnende Ventile in dieser Art können beispielsweise über eine Feder operieren. Dies hat den Nachteil, dass mit zunehmendem Volumenstrom und zunehmendem Öffnungsquerschnitt zwischen dem Ventilsitz und dem Ventilkörper auch eine zunehmende Rückstellkraft der Feder einhergeht. Dies kann zu einem Aufschwingen des Ventilkörpers und damit einer ungleichmäßigen Strömung führen, was aufgrund von auftretenden Druckschwankungen für die nachfolgenden Komponenten und/oder Dosiergenauigkeit nachteilig sein kann. Gemäß einer außerordentlich günstigen Weiterbildung der erfindungsgemäßen Vorrichtung wird als Rückstellkraft deshalb eine magnetische Kraft eigesetzt. Diese wirkt dann zwischen einem schaltbaren und/oder permanenten Magneten, beispielsweise im Bereich des Ventilkörpers aber bevorzugt im Bereich des Ventilsitzes und einem magnetisierbaren Material wie beispielsweise einer Stahl- oder Eisenlegierung im Bereich des Ventilsitzes oder bevorzugt im Bereich des Ventilkörpers. Der Ventilkörper ist also beispielsweise in Form einer hohlen Eisen- oder Stahlkugel, vorzugsweise mit einer chemisch resistenten Beschichtung, beispielsweise aus Kunststoff, ausgebildet. Er wird dann permanentmagnetisch und/oder elektromagnetisch auf dem Ventilsitz gehalten. Mit zunehmendem Volumenstrom hebt der Ventilkörper, welcher durch die Ausgestaltung als Hohlkugel eine geringe Masse hat und dementsprechend dynamisch reagiert, vom Ventilsitz ab und gibt einen durchströmbaren Querschnitt frei. Mit zunehmendem Volumenstrom wird dieser durchströmbare Querschnitt größer. Anders als bei einer federbelasteten Kugel sinkt dabei bei einer magnetischen Rückstellkraft mit dem Abstand des Ventilkörpers vom Ventilsitz auch die Rückstellkraft, so dass eine degressive Kraft-Weg-Kennlinie des jeweiligen Ventils entsteht, was für die genannten Einsatzmöglichkeiten einerseits zur Steuerung des Zuluftstroms zu der jeweiligen Zweistoffdüse und andererseits als Kathodenabsperrventil ideal ist.

Eine weitere sehr günstige Ausgestaltung der erfindungsgemäßen Vorrichtung kann es ferner vorsehen, dass das Wasser über eine Fördereinrichtung direkt oder über eine Sammelleitung zu den Zweistoffdüsen förderbar ist. In Abhängigkeit des Förderdrucks und des geförderten Volumenstroms lässt sich so die Wassermenge zur Befeuchtung einstellen. Insbesondere der Einsatz einer Sammelleitung ermöglicht dabei auch den Einsatz des Wassers in anderen Bereichen eines die Vorrichtung umgebenden Systems, insbesondere eines die Vorrichtung umgebenden Brennstoffzellensystems. Eine derartige Verwendung des Wassers mit einer Wassersammelleitung ist beispielsweise in der DE 10 2020 206 156 A1 der Anmelderin grundlegend beschrieben.

Das gesammelte Wasser kann und sollte dabei entsprechende Reinigungseinrichtungen und Filter durchlaufen, beispielsweise um Verunreinigungen mechanisch zurückzuhalten und um Ionen, welche sich in dem Wasser gesammelt haben, zu entfernen. Beispielsweise kann eine Kombination aus einem Wasserfilter mit einer Ionentauscher-Patrone vorgesehen sein und kann beispielsweise im Bereich der Sammelleitung oder zwischen den einzelnen Wasserabscheidern eines derartigen Systems und einem vorzugsweise beheizten, insbesondere den oben genannten Wärmetauscher, umfassenden Sammelbehälter angeordnet sein.

Die einzelnen abgetrennten durchströmbaren Querschnitte, mit den jeweiligen Zweistoffdüsen und den Ventilen, können dabei gemäß einer sehr vorteilhaften Weiterbildung der Idee direkt am Ausgang eines Strömungsverdichters als Luftfördereinrichtung angeordnet sein. Direkt bedeutet in diesem Zusammenhang, dass keine weiteren Komponenten dazwischengeschaltet sind. Insbesondere kann die erfindungsgemäße Vorrichtung so ausgestaltet sein, dass die abgetrennten Querschnitte mit ihren Ventilen und Zweistoffdüsen direkt am Ausgang des Strömungsverdichters angeflanscht werden, um dann die durch sie abgekühlte und befeuchtete Zuluft direkt oder über eine kurze Leitung in den Kathodenraum der Brennstoffzelle einzutragen. In diesem Bereich unmittelbar nach dem Ausgang des Strömungsverdichters liegt dabei die höchste Temperatur der Zuluft vor, so dass das Verdampfen des vorgewärmten Wassers ideal erfolgen kann, um einerseits diese Zuluft zu befeuchten und andererseits auf ein für die Brennstoffzelle geeignetes Temperaturniveau zu kühlen.

Gemäß einer außerordentlich günstigen Weiterbildung der Vorrichtung kann es dabei vorgesehen sein, dass wenigstens zwei Luftfördereinrichtungen und/oder Befeuchtungseinrichtungen als sequentielle Kaskade vorgesehen sind. Zwei solche aufeinanderfolgende Befeuchterdüsen und/oder Aufladungsstufen können dann für eine an sich bekannte Registeraufladung genutzt werden. Dies ermöglicht eine höhere Variabilität des Aufbaus und erlaubt es verschiedene Stoffströme effizient zu befeuchten.

Die jeweiligen Luftfördereinrichtung kann dabei Teil eines elektrisch unterstützten Turboladers mit der Luftfördereinrichtung, einer Abluftturbine und einer elektrischen Maschine sein. Ein solcher Aufbau, welcher auch unter dem Begriff ETC (Electric Turbo Charger) oder motorunterstützter Turbolader allgemein bekannt ist, eignet sich ideal um effizient die Luftversorgung der Brennstoffzelle zu realisieren. Zusätzlich zur typischerweise benötigten Antriebsleistung aus der elektrischen Maschine kann ergänzend aus der Abluft zurückgewonnene Energie über die Turbine für die Verdichtung eingesetzt werden. Liegt im Bereich der Turbine mehr Energie vor als für den Antrieb der Luftfördereinrichtung benötigt wird, dann die elektrische Maschine auch generatorisch betrieben werden, um diese Energie in Form von elektrischer Energie zurückzugewinnen und zwischenzuspeichern. Dies gilt dabei sowohl für den Einsatz von zwei als auch von einer Luftfördereinrichtung.

Der gesamte Aufbau der Vorrichtung kann dabei in ein Brennstoffzellensystem mit einer Brennstoffzelle, insbesondere einem Stapel von Einzelzellen, einem sogenannten Brennstoffzellenstack, integriert sein. Das Brennstoffzellensystem selbst lässt sich dabei für verschiedene stationäre oder mobile Anwendungen nutzen. Insbesondere kann es zur Bereitstellung von elektrischer Antriebsenergie für ein Fahrzeug dienen. Insbesondere bei solchen Fahrzeuganwendungen ist es einerseits von Vorteil, das gesammelte Produktwasser wieder zu nutzen, um dieses nicht auf die Straße ablassen zu müssen, und andererseits sind die entscheidenden Vorteile hinsichtlich des Bauvolumens, des Gewichts, der Energieeffizienz und der Einsparung von Komponenten durch die erfindungsgemäße Vorrichtung hier ein besonders großer Vorteil.

Weitere vorteilhafte Ausgestaltungen der erfindungsgemäßen Vorrichtung ergeben sich auch aus dem Ausführungsbeispiel, welches nachfolgend unter Bezugnahme auf die Figuren näher beschrieben ist.

Dabei zeigen:
- Fig. 1: ein schematisch angedeutetes Brennstoffzellensystem in einem Fahrzeug mit einer erfindungsgemäßen Vorrichtung;
- Fig. 2: eine Schnittdarstellung durch einen Teil der Vorrichtung gemäß der Linie II-II in Fig. 1; und
- Fig. 3: eine schematische Schnittdarstellung gemäß der Linie III-III in Fig. 2.

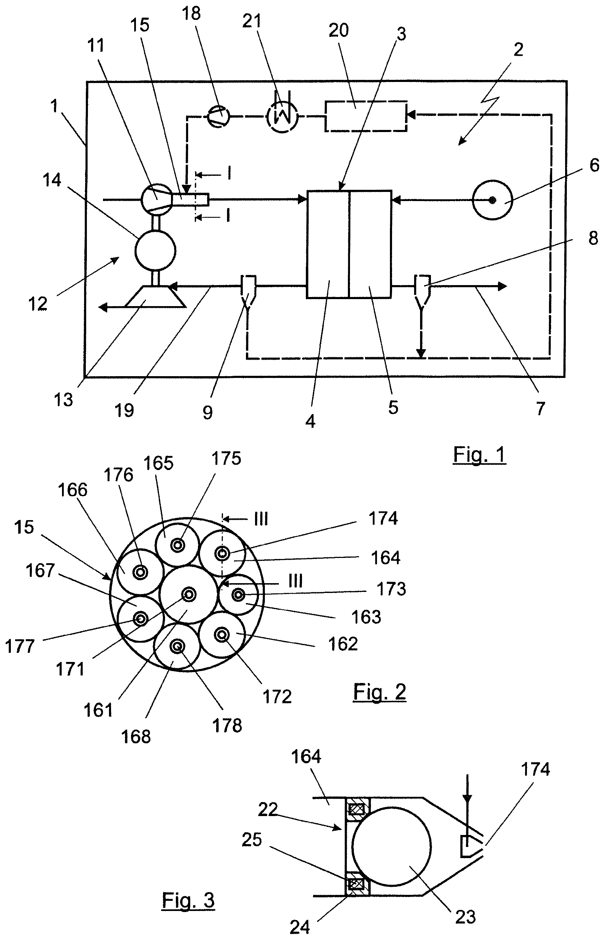

In der Darstellung der Figur 1 ist ein sehr stark schematisiert angedeutetes Fahrzeug 1, beispielsweise ein Nutzfahrzeug oder ein Personenkraftwagen zu erkennen. Zumindest ein Teil seiner elektrischen Antriebsleistung wird diesem Fahrzeug 1 von einem hier nur in Teilen und stark vereinfacht angedeuteten Brennstoffzellensystem 2 geliefert. Dieses umfasst als Kern eine Brennstoffzelle 3, welche beispielsweise als Stapel von Einzelzellen in PEM-Technologie, als sogenannter Brennstoffzellenstack aufgebaut ist. Rein beispielhaft ist hier ein gemeinsamer Kathodenraum 4 und ein gemeinsamer Anodenraum 5 exemplarisch angedeutet. Dem Anodenraum 5 wird Wasserstoff aus einem Wasserstoffspeichersystem 6 zugeführt, Restwasserstoff gelangt über eine Abgasleitung 7 mit einem Wasserabscheider 8 aus dem System. Weitere Varianten der Anodenseite sind dabei selbstverständlich möglich. Da diese für die Erfindung von untergeordneter Bedeutung sind, wird hierauf nicht weiter eingegangen. Dem Fachmann ist aber klar, dass verschiedenen Speichersysteme für den Wasserstoff, verschiedene Dosiereinrichtungen sowie ein Anodenkreislauf mit einer oder mehreren Rezirkulationsfördereinrichtungen und dergleichen hier denkbar und möglich sind.

Dem Kathodenraum 4 wird als Sauerstofflieferant Luft über eine Vorrichtung 10 zur Luftversorgung zugeführt. Teil dieser Vorrichtung 10 ist eine Luftfördereinrichtung 11, welche beispielsweise als Teil eines sogenannten elektrischen Turboladers 12 ausgebildet sein kann. Dieser an sich bekannte elektrische Turbolader 12 umfasst neben der vorzugsweise als Strömungsverdichter ausgebildeten Luftfördereinrichtung 11 eine Abluftturbine 13 und eine elektrische Maschine 14. Seine Funktionsweise ist prinzipiell bekannt, so dass hierauf nicht weiter eingegangen werden muss.

Nach der Luftfördereinrichtung 11 liegt ein heißer und trockener verdichteter Zuluftstrom zu dem Kathodenraum 4 der Brennstoffzelle 3 vor. Dieser gelangt nun, vorzugsweise direkt im Anschluss an die Luftfördereinrichtung 11, in ein Feld von einzelnen durchströmbaren Querschnitten mit jeweils einer Zweistoffdüse. Im schematischen Querschnitt der Figur 2 ist dieses in Figur 1 mit 15 bezeichnete Feld nochmals angedeutet. Die einzelnen durchströmbaren Querschnitte sind hier mit den Bezugszeichen 161 - 168 bezeichnet. Sie können beispielsweise rund sein und innerhalb des Strömungsquerschnitts der Zuluft angeordnet sein. Im Zentrum jedes einzelnen abgetrennten durchströmbaren Querschnitts 161 - 168 befindet sich eine Zweistoffdüse 171 - 178, welche einerseits von dem durch den durchströmbaren Querschnitt 161 - 168 strömenden Volumenstroms der nach der Luftfördereinrichtung 11 heißen und trockenen Luft durchströmt wird und andererseits über eine Fördereinrichtung 18, wie es in der Darstellung der Figur 1 zu erkennen ist, mit Wasser versorgt wird. Dieses Wasser ist dabei deionisiertes Wasser, welches in dem Brennstoffzellensystem 2 auskondensiert und gesammelt wird. Rein beispielhaft sind in der Darstellung der Figur 1 zwei Wasserabscheider angedeutet. Einerseits ist dies anodenseitig der bereits angesprochene Wasserabscheider 8 und andererseits ist dies in einer den Kathodenraum 4 mit der Abluftturbine 13 verbindenden Abluftleitung 19 ein hier mit 9 bezeichneter kathodenseitiger Wasserabscheider. Das so gesammelte Produktwasser gelangt beispielsweise in einen hier exemplarisch angedeuteten und mit 20 bezeichneten Tank und wird in diesem oder in Strömungsrichtung nach diesem über einen Wärmetauscher 21 vorgewärmt und gelangt dann in den Bereich der Förderpumpe 18, um so in Abhängigkeit des erzeugten Förderdrucks und des erzeugten Volumenstroms den jeweiligen Zweistoffdüsen 171 - 178 zugeführt zu werden. Dies kann beispielsweise für jede der Zweistoffdüsen 171 - 178 direkt und ggf. über ein Ventil schaltbar erfolgen, oder über eine Sammelleitung, aus welcher heraus die entsprechenden Zweistoffdüsen angeströmt werden.

Dieser Aufbau der Vorrichtung 10 ließe sich auch insofern variieren, als dass zwei oder gegebenenfalls auch mehr der Luftfördereinrichtungen als sequentielle Kaskade hintereinandergeschaltet sind. Diese würden dann jeweils von einer entsprechenden Zweistoffdüse 171 - 178 gefolgt werden, um den entsprechenden Luftstrom zu befeuchten und die anderen hier beschriebenen Funktionalitäten bereitzustellen.

In der Darstellung der Figur 3 ist nun in einer Schnittdarstellung einer der abgetrennten durchströmbaren Querschnitte, hier beispielsweise der Querschnitt 164 nochmals dargestellt. Er umfasst die Zweistoffdüse 174 sowie ein Ventil 22 bestehend aus einem Ventilkörper 23 und einem Ventilsitz 24. Der Ventilkörper 23 kann vorzugsweise als hohle Stahlkugel mit einer Kunststoffummantelung ausgestaltet sein. Im Bereich des Ventilsitzes 24 befindet sich ein Permanentmagnet 25, welcher beispielsweise als umlaufender Ring ausgestaltet ist. Dieser übt eine Anziehungskraft auf den Ventilkörper 23 aus, so dass bei einem geringen oder keinem Volumenstrom über das Ventil 22 der jeweilige durchströmbare Querschnitt 161 - 168 verschlossen ist. Dies ist insbesondere dann der Fall, wenn die Luftfördereinrichtung 11 nicht in Betrieb ist. Dadurch wird ein Durchströmen des Kathodenraums 4 mit Luft, beispielsweise mit Fahrtwind beim rein elektrischen Betrieb des Fahrzeugs 1, oder wenn dieses abgestellt ist, durch externe Windeffekte, verhindert. Dies ist von entscheidendem Vorteil um das Eindringen von frischem Sauerstoff in die Brennstoffzelle 3 zu verhindern, was bei einem späteren Wiederstart zu einem sogenannten Air/Air-Start führen und die Brennstoffzelle 3 schädigen würde.

Nun ist es so, dass mit zunehmendem Volumenstrom aus der Luftfördereinrichtung 11 zuerst eine und dann mehrere der Ventile 22 in den jeweiligen durchströmbaren Querschnitten 161 - 168 entsprechend öffnen. Insbesondere können die Rückstellkräfte so eingestellt sein, dass passend zum jeweiligen Volumenstrom aus der Luftfördereinrichtung 11 eine geeignete Anzahl der durchströmbaren Querschnitte 161 - 168 durch ihre Ventile 22 geöffnet wird, beispielsweise zuerst der zentrale durchströmbare Querschnitt 161 und dann zunehmend die zentral um ihn angeordneten durchströmbaren Querschnitte 161 - 168 bis beim maximalen Volumenstrom aus der Luftfördereinrichtung 11 alle durchströmbaren Querschnitte 161 - 168 durch ihre jeweiligen Ventile 22 geöffnet werden. Sobald über das Ventil 22 der jeweilige durchströmbare Querschnitt 161 - 168 geöffnet ist, strömt Luft durch diesen. Wird gleichzeitig Wasser zugeführt, dann wird dieses über die Zweistoffdüse 171 - 178 in dem nach der Luftfördereinrichtung 11 heißen und trockenen Luftstrom entsprechend zerstäubt, sodass die zu feinen Tröpfchen zerstäubten Wasserteilchen in dem Volumenstrom verdampfen können. Hierdurch kommt es zu einer sehr effizienten Kühlung des Zuluftstroms einerseits und einer sehr guten Befeuchtung des Zuluftstroms andererseits. Die Zweistoffdüsen 171 - 178 können dabei so ausgestaltet sein, dass diese an den jeweiligen Volumenstrom angepasst sind, so dass immer eine ideale Zerstäubung des Wassers und damit eine ideale Befeuchtung und Abkühlung entsteht. Dies gilt bei jedem Volumenstrom der zugeführten Luft, da immer nur die zu dem jeweiligen Volumenstrom passende Anzahl der durchströmbaren Querschnitte durch die Ventile 22 passiv freigegeben wird. Gleichzeitig sperren die Ventile 22 alle zusammen bei abgeschalteter Luftfördereinrichtung den Kathodenraum 4 gegenüber der Umgebung ab.

Somit ergibt sich eine feine stufenförmige Kennlinie, welche einerseits über den Förderdruck und den Volumenstrom der Luftfördereinrichtung 11 als auch über den Förderdruck und den Volumenstrom der Förderpumpe 18 eine entsprechende Regelung zulässt, um so in der warm verdichteten Luft vorgewärmtes Wasser aus dem Brennstoffzellensystem 1 zur Befeuchtung des Zuluftstroms zu nutzen. Das Vorwärmen kann dabei insbesondere in dem Wärmetauscher 21 durch Abwärme aus der Brennstoffzelle 3 selbst erfolgen, so dass diese zusätzliche Verwendung von Abwärme das Kühlsystem des Brennstoffzellensystems 2 und damit des Fahrzeugs 1 entlastet.

## Patentansprüche

1. Vorrichtung (10) zur Luftversorgung einer Brennstoffzelle (3), mit wenigstens einer Luftfördereinrichtung (11) und wenigstens einer Befeuchtungseinrichtung, welche dazu eingerichtet ist, kondensiertes Produktwasser aus der Brennstoffzelle (3) mittels wenigstens einer Düse (171-178) dem verdichteten Zuluftstrom zuzuführen, **dadurch gekennzeichnet, dass**
im Strömungsquerschnitt des Zuluftstroms ein Feld (15) von Zweistoffdüsen (171-178) für die Zufuhr des Wassers ausgebildet ist, wobei für jede der Zweistoffdüsen (171-178) ein abgetrennter durchströmbarer Querschnitt (161-168) ausgebildet ist, und wobei jeder der abgetrennten durchströmbaren Querschnitte (161-168) ein Ventil (22) mit einem Ventilsitz (24) und einem Ventilkörper (23) umfasst, welcher entgegen der Strömung von einer Rückstellkraft in Richtung des Ventilsitzes (24) gedrückt ist.

2. Vorrichtung (10) nach Anspruch 1,
**dadurch gekennzeichnet, dass**
die Rückstellkraft als magnetische Kraft zwischen einem schaltbaren und/oder permanenten Magneten im Bereich des Ventilkörpers (23) oder bevorzugt im Bereich des Ventilsitzes (24) und einem magnetisierbaren Material des Ventilsitzes (24) oder bevorzugt des Ventilkörpers (23) ausgebildet ist.

3. Vorrichtung (10) nach Anspruch 2,
**dadurch gekennzeichnet, dass**
der Ventilkörper (24) als Hohlkugel aus einem magnetisierbaren Material ausgebildet ist.

4. Vorrichtung (10) nach Anspruch 1, 2 oder 3,
**dadurch gekennzeichnet, dass**
die Rückstellkraft für jeden der abgetrennten durchströmbaren Querschnitte (161-168) vorgegeben ist, wobei wenigstens zwei der abgetrennten durchströmbaren Querschnitte (161-168) verschiedene Vorgaben und/oder Querschnittsflächen aufweisen.

5. Vorrichtung (10) nach einem der Ansprüche 1 bis 4,
**dadurch gekennzeichnet, dass**
das Wasser über eine Förderpumpe (18) direkt oder über eine Sammelleitung zu den Zweistoffdüsen (171-178) förderbar ist.

6. Vorrichtung (10) nach einem der Ansprüche 1 bis 5,
**dadurch gekennzeichnet, dass**
das Wasser in Strömungsrichtung vor den Zweistoffdüsen (171-178), bevorzugt mittels Abwärme eines die Brennstoffzelle (3) umfassenden Brennstoffzellensystems (2) betreibbaren, Wärmetauscher (21) durchströmt.

7. Vorrichtung (10) nach einem der Ansprüche 1 bis 6,
**dadurch gekennzeichnet, dass**
die abgetrennten durchströmbaren Querschnitte (161-168) direkt im Ausgang eines als Luftfördereinrichtung (11) genutzten Strömungsverdichters angeordnet sind.

8. Vorrichtung (10) nach einem der Ansprüche 1 bis 7,
**dadurch gekennzeichnet, dass**
wenigstens zwei Luftfördereinrichtungen (11) und/oder Befeuchtungseinrichtungen als sequentielle Kaskade vorgesehen sind.

9. Vorrichtung (10) nach einem der Ansprüche 1 bis 8,
**dadurch gekennzeichnet, dass**
die Zuluftströmung frei von einem Ladeluftkühler und einem Membranbefeuchter ist.

10. Brennstoffzellensystem (2) mit einer Brennstoffzelle (3) und einer Vorrichtung (10) nach einem der Ansprüche 1 bis 9, insbesondere zur Versorgung eines Fahrzeugs (1) mit zumindest einem Teil seiner elektrischen Antriebsleistung.

## Claims

1. A device (10) for supplying air to a fuel cell (3), having at least one air conveying device (11) and at least one humidifying device, which is configured to supply condensed product water from the fuel cell (3) to the compressed supply air flow by means of at least one nozzle (171-178), **characterized in that**
a field (15) of two-substance nozzles (171-178) for the supply of water is formed in the flow cross section of the supply air flow, wherein a separated cross section (161-168) through which flow can take place is formed for each of the two-substance nozzles (171-178) and wherein each of the separated cross sections (161-168) through which flow can take place comprises a valve (22) having a valve seat (24) and a valve body (23), which is pressed counter to the flow by a restoring force in the direction of the valve seat (24).

2. The device (10) according to claim 1,
**characterized in that**
the restoring force is formed as a magnetic force between a switchable and/or permanent magnet in the area of the valve body (23) or preferably in the area of the valve seat (24) and a magnetizable material of the valve seat (24) or preferably the valve body (23).

3. The device (10) according to claim 2,
**characterized in that**
the valve body (24) is designed as a hollow ball made of a magnetizable material.

4. The device (10) according to claim 1, 2, or 3,
**characterized in that**
the restoring force for each of the separated cross sections (161-168) through which flow can take place is predetermined, wherein at least two of the separated cross sections (161-168) through which flow can take place have different specifications and/or cross sectional areas.

5. The device (10) according to any one of claims 1 to 4,
**characterized in that**
the water can be conveyed via a conveying pump (18) directly or via a collecting line to the two-substance nozzles (171-178).

6. The device (10) according to any one of claims 1 to 5,
**characterized in that**
the water flows upstream of the two-component nozzles (171-178) through a heat exchanger (21), which is preferably operable by means of waste heat from a fuel cell system (2) comprising the fuel cell (3).

7. The device (10) according to any one of claims 1 to 6,
**characterized in that**
the separated cross sections (161-168) through which flow can take place are arranged directly in the outlet of a flow compressor used as an air conveying device (11).

8. The device (10) according to any one of claims 1 to 7,
**characterized in that**
at least two air conveying devices (11) and/or humidifying devices are provided as a sequential cascade.

9. The device (10) according to any one of claims 1 to 8,
**characterized in that**
the supply air flow is free of an intercooler and a membrane humidifier.

10. A fuel cell system (2) having a fuel cell (3) and a device (10) as claimed in any one of claims 1 to 9, in particular for supplying a vehicle (1) with at least part of its electrical driv

## Revendications

1. Dispositif (10) d'alimentation en air d'une pile à combustible (3), avec au moins un système d'acheminement d'air (11) et au moins un système d'humidification, lequel est mis au point pour amener au flux d'air entrant comprimé de l'eau produite condensée provenant de la pile à combustible (3) au moyen d'au moins une buse (171 - 178), **caractérisé en ce que**
un champ (15) de buses à deux composants (171 - 178) est réalisé, dans la section transversale d'écoulement du flux d'air entrant pour l'amenée de l'eau, dans lequel une section transversale (161 - 168) pouvant être parcourue séparée est réalisée pour chacune des buses à deux composants (171 - 178), et dans lequel chacune des sections transversales (161 - 168) pouvant être parcourues séparées comprend une soupape (22) avec un siège de soupape (24) et un corps de soupape (23), lequel est pressé par une force de rappel en direction du siège de soupape (24) à l'encontre de l'écoulement.

2. Dispositif (10) selon la revendication 1,
**caractérisé en ce que**
la force de rappel est réalisée en tant que force magnétique entre un aimant commutable et/ou permanent dans la zone du corps de soupape (23) ou de manière préférée dans la zone du siège de soupape (24) et un matériau magnétisable du siège de soupape (24) ou de manière préférée du corps de soupape (23).

3. Dispositif (10) selon la revendication 2,
**caractérisé en ce que**
le corps de soupape (24) est réalisé en tant que sphère creuse composée d'un matériau magnétisable.

4. Dispositif (10) selon la revendication 1, 2, ou 3,
**caractérisé en ce que**
la force de rappel est spécifiée pour chacune des sections transversales (161 - 168) pouvant être parcourues séparées, dans lequel au moins deux des sections transversales (161 - 168) pouvant être parcourues séparées présentent des spécifications et/ou des surfaces de section transversale différentes.

5. Dispositif (10) selon l'une quelconque des revendications 1 à 4,
**caractérisé en ce que**
l'eau peut être acheminée aux buses à deux composants (171 - 178) directement par l'intermédiaire d'une pompe d'acheminement (18) ou par l'intermédiaire d'un conduit de collecte.

6. Dispositif (10) selon l'une quelconque des revendications 1 à 5,
**caractérisé en ce que**
l'eau parcourt dans la direction d'écoulement avant les buses à deux composants (171 - 178) de manière préférée un échangeur de chaleur (21) pouvant fonctionner au moyen de la chaleur perdue d'un système de pile à combustible (2) comprenant la pile à combustible (3).

7. Dispositif (10) selon l'une quelconque des revendications 1 à 6,
**caractérisé en ce que**
les sections transversales (161 - 168) pouvant être parcourues séparées sont disposées directement à la sortie d'un compresseur d'écoulement utilisé en tant que système d'acheminement d'air (11).

8. Dispositif (10) selon l'une quelconque des revendications 1 à 7,
**caractérisé en ce que**
au moins deux systèmes d'acheminement d'air (11) et/ou des systèmes d'humidification sont prévus en tant que cascade séquentielle.

9. Dispositif (10) selon l'une quelconque des revendications 1 à 8,
**caractérisé en ce que**
l'écoulement d'air entrant est dépourvu d'un refroidisseur d'air de charge et d'un humidificateur de membrane.

10. Système de pile à combustible (2) avec une pile à combustible (3) et un dispositif (10) selon l'une quelconque des revendications 1 à 9, en particulier destiné à alimenter un véhicule (1) en au moins une partie de sa puissance d'entraînement électrique.
